# NEUE EUROPÄISCHE PATENTSCHRIFT

(11) **EP 1 287 045 B2**
(45) Veröffentlichungstag und Bekanntmachung des Hinweises auf die Entscheidung über den Einspruch: **27.01.2010**
(45) Hinweis auf die Patenterteilung: 10.12.2003
(21) Anmeldenummer: 01964950.8
(22) Anmeldetag: 25.05.2001
(51) Int. Cl.: C08F 210/02, C08F 2/00, C08F 220/00

(54) **VERFAHREN ZUR HOCHDRUCKPOLYMERISATION VON ETHYLEN IN GEGENWART VON ÜBERKRITISCHEM WASSER**
METHOD FOR HIGH PRESSURE POLYMERIZATION OF ETHYLENE IN THE PRESENCE OF SUPERCRITICAL WATER
PROCEDE DE POLYMERISATION A HAUTE PRESSION D'ETHYLENE EN PRESENCE D'EAU SURCRITIQUE

(30) Priorität: 30.05.2000 DE 10026581
(43) Veröffentlichungstag der Anmeldung: 05.03.2003
(73) Patentinhaber: Basell Polyolefine GmbH, 50389 Wesseling (DE)
(72) Erfinder: HÄFFNER, Eckhard, 38687 Clausthal-Zellerfeld (DE); LITTMANN, Dieter, 35325 Mücke (DE); MÄHLING, Frank-Olaf, 68167 Mannheim (DE); KÖHLER, Gernot, 67149 Meckenheim (DE)
(86) Internationale Anmeldenummer: PCT/EP2001/005996
(87) Internationale Veröffentlichungsnummer: WO 2001/093225

(56) Entgegenhaltungen:
- EP-A- 0 449 092
- EP-B1- 0 271 738
- DD-A1- 140 890
- DE-A- 2 524 474
- JP-T1- 58 108 216
- EUROPEAN POLYMER JOURNAL Bd. 17, 1981, Seiten 115 - 120
- 'Sales specification vinyl acetate' DER CELANESE CHEMICALS 1998, Seite 1
- ABNAHMEPRÜFZEUGNIS B 26 August 1999, DER CELANESE GMBH, Seite 1
- ARG-ETHYLEN-SPEZIFIKATION Seite 1

## Beschreibung

Gegenstand der Erfindung ist ein Verfahren zur Polymerisation von Ethylen und optional weiteren Monomeren in einem Hochdruckreaktor bei Drücken zwischen 1000 und 4000 bar und Temperaturen zwischen 140 und 320°C, in jedem Fall jedoch unter Druck- und Temperaturbedingungen, bei denen Wasser überkritisches Verhalten zeigt.

Hochdruckpolymerisationsverfahren zur Herstellung von Polyethylen und Ethylencopolymeren sind seit langem bekannt. Besonders verbreitet sind solche Verfahren, die in Hochdruckröhren-Reaktoren durchgeführt werden. Solche Verfahren werden beispielsweise in EP-A-449092, EP-A-394794, EP-B-567818 und DE-A-4102808 beschrieben. Der Umsatz solcher Hochdruckpolymerisationsverfahren ist unter anderem durch die Effektivität der Wärmeabfuhr der exothermen Polymerisationsreaktion begrenzt. Die Abfuhr der Polymerisationswärme in solchen Rohrreaktoren wird insbesondere dadurch limitiert, daß sich durch die langsamere Strömungsgeschwindigkeit an der Rohrinnenoberfläche Belagschichten aufbauen, welche eine effektive Wärmeabfuhr behindern.

Der vorliegenden Erfindung lag daher die Aufgabe zugrunde, die Wärmeabfuhr bei Hochdruckpolymerisationen von Ethylen zu verbessern und auf diese Weise den Umsatz solcher Verfahren zu erhöhen.

Demgemäß wurde das eingangs beschriebene Verfahren zur Polymerisation von Ethylen und optional weiteren Monomeren gefunden, welches dadurch gekennzeichnet ist, daß man kontinuierlich oder intermittierend Wasser in den Reaktor einbringt.

Nach dem erfindungsgemäßen Polymerisationsverfahren können Homopolymerisate von Ethylen sowie Copolymerisate von Ethylen mit weiteren Monomeren hergestellt werden. Als Comonomere eignen sich beispielsweise α,β-ungesättigte Carbonsäuren oder Derivate solcher Carbonsäuren.

Die als Comonomere in dem erfindungsgemäßen Verfahren einsetzbaren α,β-ungesättigten Carbonsäuren sind im allgemeinen kurzkettige Carbonsäuren mit 3 bis 8 Kohlenstoffatomen. Zu nennen sind beispielsweise Acrylsäure, Methacrylsäure, Crotonsäure, Maleinsäure und Fumarsäure, wobei besonders Acrylsäure und Methacrylsäure bevorzugte Comonomere darstellen.

Neben den freien Säuren können als Comonomere auch Derivate, insbesondere Ester von C₂-C₆-Alkanolen, also Ethyl-, Propyl-, Butyl-, Pentyl- oder Hexylester eingesetzt werden. Besonders vorteilhaft wird als Comonomer N-Butylacrylat eingesetzt.

Ein weiteres besonders vorteilhaft in dem erfindungsgemäßen Verfahren einsetzbares Comonomer ist Vinylacetat.

Die Comonomere werden üblicherweise in Konzentrationen eingesetzt, sodaß der Anteil des Comonomers im Copolymerisat 1 bis 30 Gew.-% beträgt. Im Falle von Acrylatestern beträgt der bevorzugte Comonomeranteil im Ethylencopolymerisat zwischen 0,5 und 20 Gew.-%, insbesondere zwischen 1 und 10 Gew.-%. Der bevorzugte Anteil von Vinylacetat in Vinylacetat-haltigen Copolymerisaten beträgt zwischen 1 und 30 Gew.-%, insbesondere 2 bis 25 Gew.-%.

Das erfindungsgemäße Verfahren kann in allen üblichen Hochdruckreaktoren durchgeführt werden. Da die Belagbildung insbesondere bei Hochdruck-Rohrreaktoren infolge der großen Reaktoroberfläche dieser Reaktoren besondere Bedeutung hat, ist das erfindungsgemäße Verfahren besonders vorteilhaft in Hochdruck-Rohrreaktoren einsetzbar.

Unter Rohrreaktoren versteht man rohrförmige Polymerisationsgefäße, deren Verhältnis Länge-zu-Durchmesser der druckfesten Rohre im allgemeinen im Bereich 10.000 bis 60.000 : 1 liegt. In jedem Fall haben diese röhrenförmigen Reaktoren ein Länge-zu- Durchmesser-Verhältnis von > 1000. Angaben über Ethylenhochdruck- Polymerisationsverfahren, bei denen Rohrreaktoren benutzt werden, finden sich beispielsweise in "Ullmanns Enzyklopädie der technischen Chemie", 1980, 4. Auflage, Band 19, S. 167-178, Verlag Chemie GmbH, 6940 Weinheim.

Dabei können alle bekannten Reaktortypen eingesetzt werden, also z.B. Reaktoren mit oder ohne Kaltgaseinspeisung, Reaktoren mit Druckwasserkühlung usw., wie sie dem Fachmann bekannt sind.

Das erfindungsgemäße Verfahren wird vorteilhafterweise bei 2000 bis 3500 bar, insbesondere bei Drücken zwischen 2200 und 3500 bar durchgeführt. Die bevorzugten Temperaturen liegen zwischen 160 und 300°C, wobei bei der Copolymerisation von Ethylen mit empfindlichen Comonomeren, insbesondere von Carbonsäure-Estern, vorzugsweise bei Temperaturen unter 220°C polymerisiert wird.

Allgemein ist ein Verfahren bevorzugt, welches dadurch gekennzeichnet ist, daß die Polymerisationstemperatur nicht höher als 280°C ist.

Wichtig ist für das erfindungsgemäße Verfahren, daß die Druckund Temperatur-Bedingungen stets so gewählt werden, daß Wasser zumindest im überwiegenden Teil des Reaktorvolumens in überkritischem Zustand vorliegen kann. Die überkritischen Daten von Wasser sind leicht aus entsprechenden Tabellen zu entnehmen.

Das Wasser kann kontinuierlich oder intermittierend in den Reaktor eingebracht werden. Eine vorteilhafte Ausführungsform des erfindungsgemäßen Verfahrens ist dadurch gekennzeichnet, daß man das Wasser kontinuierlich in den Reaktor einbringt. Durch die kontinuierliche Einspeisung kleiner Wassermengen werden Schwankungen der Produktqualität vermieden.

Wichtig für den Erfolg des erfindungsgemäßen Verfahrens ist die Einstellung der richtigen Wasserkonzentration im Reaktor. Zu geringe Wasserkonzentrationen bringen nicht den gewünschten Effekt der verbesserten Wärmeabfuhr. Zu hohe Konzentrationen des überkritischen Wassers führen dagegen zu unerwünschter Beeinträchtigung der Produktqualität. Die optimale Konzentration des überkritischen Wassers in dem Reaktor hängt allerdings von den jeweiligen Druck- und Temperaturbedingungen sowie von der Reaktorgeometrie und der Durchflußgeschwindigkeit durch den Reaktor ab. Für den jeweiligen Reaktor und die gewünschten Polymerisationsbedingungen muß daher die optimale Konzentration des überkritischen Wassers jeweils ermittelt werden. Dies ist jedoch für den Fachmann leicht zu bewerkstelligen. Üblicherweise beginnt man bei konstanten Polymerisations-Parametern, zunächst sehr geringe Mengen von Wasser in den Reaktor einzuspeisen. Durch geeignete Temperatur-Messeinrichtungen wird dann die Temperaturdifferenz zwischen Reaktor-Innenraum und der Außenoberfläche des Druckrohres verfolgt und die Konzentration des überkritischen Wassers solange erhöht, bis einerseits ein minimaler Wert dieser Temperaturdifferenz erreicht wird, andererseits jedoch die gewünschte Produktqualität noch erreicht wird.

Eine bevorzugte Ausführungsform des erfindungsgemäßen Verfahrens ist dadurch gekennzeichnet, daß die Konzentration des Wassers, bezogen auf die Ethylenmenge, im Reaktor in einem Bereich von 0,0001 bis 5 Gew. % liegt. Insbesondere geringere Mengen an Wasser zeigen einen optimalen Effekt. In einer vorteilhafte Ausführungsform werden daher von 0,0001 bis 1 Gew.% Wasser, bevorzugt von 1 bis 5000 ppm (Massenanteile) Wasser und besonders bevorzugt von 1 bis 2000 ppm Wasser, jeweils bezogen auf die Ethylenmenge, eingespeist.

Weiterhin hat sich ein Verfahren als besonders geeignet erwiesen, welches dadurch gekennzeichnet ist, daß man die Temperaturdifferenz zwischen dem Innenraum und der Außenoberfläche des Druckrohres mißt und die Menge des in den Reaktor eingebrachten Wassers in Abhängigkeit von der so gemessenen Temperaturdifferenz regelt. Als Außenoberfläche ist im Allgemeinen der Kühlwassermantel des Reaktors zu verstehen. Wie oben erwähnt, gilt es dabei, eine möglichst geringe Temperaturdifferenz zu erreichen, weil dies ein Indikator für eine nur wenig ausgeprägte Belagschicht an der Innenoberfläche des Reaktors darstellt. Der Ort dieser Temperaturdifferenz-Messung hängt von der Fahrweise des Reaktors ab. Bei einfachen Reaktoren, bei denen der Monomerenstrom nur an einer Stelle am Eingang des Reaktors eingespeist wird, weist der Reaktor in der Regel ein einfaches Temperaturprofil auf, sodaß eine Stelle zur Messung der Temperaturdifferenz ausreichend sein kann. Bei Reaktoren, bei denen an mehreren Stellen Initiator injiziert wird, und insbesondere bei Reaktoren, bei denen an mehreren Stellen Monomerkaltgas eingespeist wird, ist es vorteilhaft, die Messung der Temperaturdifferenz an mehreren Stellen des Reaktors vorzunehmen.

Bei dem erfindungsgemäßen Verfahren kann die Polymerisation durch verschiedene Initiatoren gestartet werden. Als Initiatoren kommen z.B. Luft, Sauerstoff oder peroxidische Polymerisationsinitiatoren in Betracht. Insbesondere die Initiierung mit Peroxiden stellt eine bevorzugte Ausführungsform des erfindungsgemäßen Verfahrens dar. Dabei kommen insbesondere solche Peroxide in Betracht, die erst bei relativ hohen Temperaturen in Radikale zerfallen. Als geeignete peroxidische Polymerisationsinitiatoren kommen beispielsweise 1,1-bis(t.-Butylperoxy)cyclohexan, 1,1-bis(t.-Butylperoxy)butan, t.-Butylperoxy-3,5,5-trimethylhexanoat, t.-Butylperoxybenzoat, 2,5-bis(t.-Butylperoxy)-2,5-dimethylhexan, t.-Butylkumylperoxid, Di-t.-Butylperoxid und 2,5-bis(t.-Butylperoxy)2,5-dimethyl-3-hexin in Betracht, besonders bevorzugt wird Di-t.-Butylperoxid eingesetzt.

In einer bevorzugten Ausführungsform des erfindungsgemäßen Verfahrens werden als peroxidische Polymerisationsinitiatoren solche mit einer Zerfallstemperatur von mind. 150°C eingesetzt. Dabei können sowohl einzelne Peroxide als bevorzugt auch Gemische verschiedener Peroxide zum Einsatz kommen.

Eine Besonderheit des erfindungsgemäßen Verfahrens ist darin zu sehen, daß das überkritische Wasser selbst Initiatorwirkung entfalten kann und daher die Konzentration der anderen Initiatoren in der Regel verringert werden kann. Dieser Effekt ist besonders wünschenswert, da die Initiatoren einen wichtigen Kostenfaktor bei der Hochdruckpolymerisation von Ethylen darstellen.

Wie bereits oben erwähnt, läßt sich das erfindungsgemäße Verfahren in Reaktoren mit einfacher Monomereinspeisung sowie auch in Reaktoren mit Mehrfach-Kaltgaseinspeisung anwenden. Eine vorteilhafte Ausführungsform des Verfahrens ist dadurch gekennzeichnet, daß das Ethylen und optional weitere Monomere an mehreren verschiedenen Stellen des röhrenförmigen Reaktors in diesen Reaktor eingespeist werden.

Auch das Wasser kann entweder nur am Eingang des Reaktors eingespeist werden oder auch an verschiedenen Stellen entlang des Reaktors. So kann das Wasser beispielsweise zusammen mit den Monomeren eingespeist werden oder aber auch an den Stellen, an denen Initiator in den Reaktor injiziert werden.

### Beispiele und Vergleichsversuche

Die Beispiele 1 bis 4 und Vergleichsversuch 1 (V1) wurden in einem röhrenförmigen Reaktor mit einer Länge von 450 m und einem Verhältnis von Länge zu Durchmesser von 29300 durchgeführt. Propionaldehyd wurde mit Wasser versetzt, so dass die in Tabelle 1 angegebene Menge Wasser, sowie die zur Erreichung des angestrebten Schmelzflussindex von 0,3 g/10min benötigte Menge Propionaldehyd als Molmassenregler zum Einsatz kam. Als Radikalstarter wurde ein Peroxidgemisch aus bis zu drei organischen Peroxiden (tief-, mittel- und hochzerfallend) verwendet und mittels Hochdruckkolbenpumpen direkt den Einspeisestellen des Rohrreaktors zugeführt. Die Reaktionszonen waren jeweils in zwei separate, gekühlte Zonen unterteilt. Die Wassereintrittstemperatur in jeder Reaktionszone betrug 170°C. Der Reaktor ist in drei Reaktionszonen mit Längen von 170 m (Reaktionszone 1), 170 m (Reaktionszone 2 und 110 m (Reaktionszone 3) unterteilt. Das sauerstofffreie Ethylen (3,6 t/h) wurde in mehreren Stufen auf den jeweiligen Reaktionsdruck von 3000 bar komprimiert und zusammen mit dem Propionaldehyd/Wasser Gemisch der ersten Reaktionszone des Rohrreaktors zugeführt.

Die bei der Polymerisation freiwerdende Reaktionswärme wurde der Reaktionsmischung über einen Kühlmittelkreislauf entzogen. Das resultierende Polymerisat wurde in üblicher und bekannte Weise in dem Reaktor nachgeschalteten Abscheidern von nicht umgesetztem Ethylen und anderen niedermolekularen Verbindungen abgetrennt.

Der Wassergehalt wurde mittels Messung des Brechungsindex (Refraktometrie) gegenüber einer Eichgeraden überprüft. Für geringere Mengen an Wasser (kleiner 0,15 Gew.% Wasser bezogen auf den Molmassenregler) eignet sich insbesondere eine Bestimmung des Wassergehaltes nach Karl-Fischer (oximetrische Titration).

Es wurde jeweils ein Produkt mit einer Dichte (gemessen nach ISO 1183) zwischen 0,9265 und 0,927 g/cm³ und einem Schmelzflussindex MFI(190°C/2,16) (gemessen nach ISO 1133) von 0,3 g/10min erhalten.

Beispiel 5 und Vergleichsversuch 2 (V2) wurden in einem röhrenförmigen Reaktor mit einer Länge von 540 m und einem Verhältnis von Länge zu Durchmesser von 30500 durchgeführt. Propan wurde als Molmassenregler verwendet. Als Radikalstarter wurde Luft verwendet und dem Ethylen im Verdichterbereich zudosiert. Der Reaktor ist in zwei Reaktionszonen von jeweils gleicher Länge unterteilt. Die Reaktionszonen sind jeweils in zwei separate gekühlte Zonen unterteilt. Die Wassereintrittstemperatur in jeder Reaktionszone betrug 178°C. Das Frischethylen (3,6 t/h) wird nach dem Nachverdichter in zwei Stränge aufgeteilt (im Verhältnis 2:1) und an verschiedenen Stellen des Reaktors, jeweils zu Beginn der Reaktionszone zugeführt (2 Teile in Reaktionszone 1 und 1 Teil in Reaktionszone 2). Wasser wurde dem Ethylen kurz vor den Einlaßstellen zur Reaktionszone 1 des Rohrreaktors, im sog. Vorwärmer, zugeführt.

Die bei der Polymerisation freiwerdende Reaktionswärme wurde der Reaktionsmischung über einen Kühlmittelkreislauf entzogen. Das resultierende Polymerisat wurde in üblicher und bekannte Weise in dem Reaktor nachgeschalteten Abscheidern von nicht umgesetztem Ethylen und anderen niedermolekularen Verbindungen abgetrennt.

Es wurde jeweils ein Produkte mit einer Dichte (gemessen nach ISO 1183) zwischen 0,9265 und 0,927 g/cm³ und einem Schmelzflussindex MFI(190°C/2,16) (gemessen nach ISO 1133) von 0,3 g/10min erhalten.

Abkürzungen:
T RZ1ein ist die Gastemperatur zu Beginn der Reaktionszone 1
T RZ1max ist die maximale Gastemperatur in Reaktionszone 1
T RZ2ein ist die Gastemperatur zu Beginn der Reaktionszone 2
T RZ2max ist die maximale Gastemperatur in Reaktionszone 2
T RZ3ein ist die Gastemperatur zu Beginn der Reaktionszone 3
T RZ3max ist die maximale Gastemperatur in Reaktionszone 3
T RZ1aus ist die Gastemperatur am Ende der Reaktionszone 1

**Tabelle 1: Polymerisationsdaten**

| Bsp. | Wassermenge Dosierung in mL/h | Wassermenge Dosierung in ppm | T RZ1ein in °C | T RZ1max in °C | T RZ2ein in °C | T RZ2max in °C | T RZ3ein in °C | T RZ3max in °C | Produktion in kg/h |
|---|---|---|---|---|---|---|---|---|---|
| 1 | 30 | 8 | 167 | 273 | 215 | 284 | 219 | 284 | 885 |
| 2 | 55 | 15 | 165 | 272 | 209 | 283 | 215 | 283 | 925 |
| 3 | 90 | 25 | 164 | 273 | 210 | 282 | 216 | 282 | 910 |
| 4 | 1090 | 305 | 164 | 270 | 212 | 283 | 218 | 281 | 875 |
| V1 | - | - | 166 | 274 | 225 | 285 | 226 | 285 | 825 |

**Tabelle 2: Polymerisationsdaten**

| Bsp. | Wassermenge Dosierung in mL/h | Wassermenge Dosierung in ppm | T RZ1ein in °C | T RZ1max in °C | T RZ1aus in °C | T RZ2ein in °C | T RZ2max in °C | Produktion in kg/h |
|---|---|---|---|---|---|---|---|---|
| V2 | - | - | 187 | 280 | 235 | 178 | 271 | 770 |
| 5 | 1200 | 330 | 186 | 282 | 224 | 172 | 281 | 840 |

## Patentansprüche

1. Verfahren zur Homopolymerisation von Ethylen in einem Hochdruckrohrreaktor mit einem Länge-zu-Durchmesser-Verhältnis von > 1000 bei Drücken zwischen 1000 und 4000 bar und Temperaturen zwischen 140 und 320°C, in jedem Fall jedoch unter Druck und Teinperaturbedingungen, bei denen Wasser überkritisches Verhalten zeigt, **dadurch gekennzeichnet, dass** man kontinuierlich oder intermittierend Wasser in einer Menge von 1 bis 5000 ppm (Massenanteile) bezogen auf die Ethylenmenge in den Reaktor einbringt.

2. Verfahren nach Anspruch 1, **dadurch gekennzeichnet, dass** man das Wasser kontinuierlich in den Reaktor einbringt.

3. Verfahren nach Anspruch 1 oder 2, **dadurch gekennzeichnet, dass** man die Temperaturdifferenz zwischen dem Innenraum und der Außenoberfläche des Druckrohrs misst und die Menge des in den Reaktor eingebrachten Wassers in Abhängigkeit von der so gemessenen Temperaturdifferenz regelt.

4. Verfahren nach den Ansprüchen 1 bis 3, **dadurch gekennzeichnet, dass** man die Polymerisation durch Peroxide initiiert.

5. Verfahren nach den Ansprüchen 1 bis 4, **dadurch gekennzeichnet, dass** das Ethylen an mehreren verschiedenen Stellen des röhrenförmigen Reaktors in den Reaktor eingespeist wird.

6. Verfahren nach den Ansprüchen 1 bis 5, **dadurch gekennzeichnet, dass** der Druck im Reaktor zwischen 2200 und 3500 bar beträgt.

7. Verfahren nach den Ansprüchen 1 bis 6, **dadurch gekennzeichnet, dass** die Polymerisationstemperatur nicht höher als 280°C ist.

## Claims

1. A process for homopolymerising ethylene in a high-pressure tubular reactor with a length-to-diameter ratio of > 1000 at pressures of between 1000 and 4000 bar and temperatures of between 140 and 320°C, but in any case under pressure and temperature conditions under which water exhibits supercritical behaviour, **characterised in that** water is introduced into the reactor continuously or intermittently in a quantity of from 1 to 5000 ppm (fractions by weight) relative to the quantity of ethylene.

2. A process according to claim 1, **characterised in that** the water is introduced continuously into the reactor.

3. A process according to claim 1 or claim 2, **characterised in that** the temperature difference between the interior and the outer surface of the pressure tube is measured and the quantity of water introduced into the reactor is adjusted as a function of the temperature difference thus measured.

4. A process according to claims 1 to 3, **characterised in that** polymerisation is initiated by peroxides.

5. A process according to claims 1 to 4, **characterised in that** the ethylene is fed into the reactor at a plurality of different points of the tubular reactor.

6. A process according to claims 1 to 5, **characterised in that** the pressure in the reactor amounts to between 2200 and 3500 bar.

7. A process according to claims 1 to 6, **characterised in that** the polymerisation temperature is no higher than 280°C.

## Revendications

1. Procédé pour l'homopolymérisation d'éthylène dans un réacteur tubulaire à haute pression présentant un rapport longueur à diamètre > 1000 à des pressions entre 1000 et 4000 bars et à des températures entre 140 et 320°C, dans chaque cas cependant sous une pression et à des conditions de température auxquelles l'eau présente un comportement surcritique, **caractérisé en ce qu'**on introduit de manière continue ou par intermittence de l'eau en une quantité de 1 à 5000 ppm (proportions en masse) par rapport à la quantité d'éthylène dans le réacteur.

2. Procédé selon la revendication 1, **caractérisé en ce qu'**on introduit en continu de l'eau dans le réacteur.

3. Procédé selon la revendication 1 ou 2, **caractérisé en ce qu'**on mesure la différence de température entre l'espace intérieur et la surface extérieure du tube de pression et on régule la quantité d'eau introduite dans le réacteur en fonction de la différence de température ainsi mesurée.

4. Procédé selon les revendications 1 à 3, **caractérisé en ce qu'**on initie la polymérisation par des peroxydes.

5. Procédé selon les revendications 1 à 4, **caractérisé en ce que** l'éthylène est injecté dans le réacteur en plusieurs endroits différents du réacteur tubulaire.

6. Procédé selon les revendications 1 à 5, **caractérisé en ce que** la pression dans le réacteur est comprise entre 2200 et 3500 bars.

7. Procédé selon les revendications 1 à 6, **caractérisé en ce que** la température de polymérisation n'est pas supérieure à 280°C.
